(19) Europäisches Patentamt
European Patent Office
Office européen des brevets

(11) **EP 1 496 680 B1**

(12) **EUROPÄISCHE PATENTSCHRIFT**

(45) Veröffentlichungstag und Bekanntmachung des Hinweises auf die Patenterteilung:
**02.11.2016   Patentblatt 2016/44**

(51) Int Cl.:
*H04M 3/56* (2006.01)        *H04S 5/00* (2006.01)

(21) Anmeldenummer: **04102598.2**

(22) Anmeldetag: **08.06.2004**

(54) **Konferenzeinrichtung und Verfahren unter Verwendung von HRTF-Filter**

Conference system and method applying HRTF-filter

Système et procédé de conférence appliquant des filtres de transfert binauraux (HRTF)

(84) Benannte Vertragsstaaten:
**DE FR GB IT SE**

(30) Priorität: **08.07.2003   DE 10330808**

(43) Veröffentlichungstag der Anmeldung:
**12.01.2005   Patentblatt 2005/02**

(73) Patentinhaber: **Unify GmbH & Co. KG**
**80807 München (DE)**

(72) Erfinder: **Lucioni, Gonzalo**
**58454 Witten (DE)**

(74) Vertreter: **Fritzsche, Thomas et al**
**Fritzsche Patent**
**Naupliastraße 110**
**81545 München (DE)**

(56) Entgegenhaltungen:
**US-A- 6 011 851        US-A- 6 118 875**
**US-A1- 2003 081 115**

EP 1 496 680 B1

**Beschreibung**

Zeitgemäße Kommunikationssysteme zeichnen sich zunehmend durch eine Vernetzung unterschiedlicher Technologien, Übertragungsverfahren und Übertragungsmedien aus. In derart inhomogenen Kommunikationssystemen wird die Übertragungsqualität und insbesondere die Sprachübertragungsqualität in wesentlichem Maße durch eine jeweils verwendete Kommunikationsnetztechnologie, durch netzspezifische Übertragungsbedingungen (z.B. bei Funknetzen) oder durch Verbindungsübergänge zwischen unterschiedlichen Kommunikationsnetzen beeinflusst. Häufig werden zumindest Teilverbindungen über Mobilfunknetze mit verhältnismäßig niedriger Bandbreite und entsprechend geringer Sprachqualität geführt. Aufgrund solcher Unterschiede der Sprachübertragungsqualität in inhomogenen Kommunikationssystemen kann sich insbesondere bei Konferenzsystemen die Verständlichkeit und Unterscheidbarkeit von Konferenzteilnehmern erheblich verschlechtern.

Aus der Patentschrift US 6,011,851 A und der Offenlegungsschrift US 2003/0081115 A1 ist bekannt, Audiosignalen von Konferenzteilnehmern durch binaurale Filterung einen teilnehmerspezifischen Stereoeffekt zu verleihen, der die Konferenzteilnehmer akustisch besser unterscheidbar macht. Dies setzt jedoch eine aufwendige, separate Behandlung der jeweiligen beiden Stereosignale voraus. Weitere binaurale Methoden, die in einem Konferenzsystem verwendet werden können, sind darüber hinaus aus der Patentschrift US 6,118,875 bekannt.

Es ist Aufgabe der vorliegenden Erfindung eine weniger aufwendige Konferenzeinrichtung sowie ein weniger aufwendiges Verfahren zur Mehrpunktkommunikation anzugeben, wodurch sich die Verständlichkeit und Unterscheidbarkeit von Konferenzteilnehmern bei der Sprachwiedergabe verbessern lässt.

Gelöst wird diese Aufgabe durch eine Konferenzeinrichtung mit den Merkmalen des Patentanspruchs 1 sowie durch ein Verfahren mit den Merkmalen des Patentanspruchs 7.

Vorteilhafte Ausführungsformen und Weiterbildungen der Erfindung sind in den abhängigen Ansprüchen angegeben.

Die erfindungsgemäße Konferenzeinrichtung weist mehrere, jeweils einem Konferenzteilnehmer zuzuordnende monaurale HRTF-Filter auf. Die Abkürzung HRTF steht für den englischsprachigen Ausdruck "Head Related Transfer Function" und bezeichnet eine sogenannte Außenohrübertragungsfunktion. Ein jeweiliges monaurales HRTF-Filter dient zum Filtern eines vom jeweils zugeordneten Konferenzteilnehmer stammenden monauralen Audiosignals. Unter einem Audiosignal sei hier und im Folgenden auch ein Übertragungssignal zur Übertragung einer Datenrepräsentation eines Audiosignals verstanden. Für die Filtercharakteristik eines jeweiligen HRTF-Filters ist ein diesem zugeordneter individueller, monauraler HRTF-Filterkoeffizientensatz maßgeblich. Die Konferenzeinrichtung verfügt weiterhin über eine an die HRTF-Filter gekoppelte Konferenzmischeinrichtung zum Mischen der individuell gefilterten Audiosignale verschiedener Konferenzteilnehmer und zum Übertragen der gemischten monauralen Audiosignale an Konferenzteilnehmer. Die monauralen HRTF-Filterkoeffizientensätze sind derart konstruiert und den HRTF-Filtern zugeordnet, dass die Konferenzteilnehmer hinsichtlich des Höreindrucks der gefilterten Audiosignale virtuell in unterschiedlichen Richtungen der Medianebene positioniert sind.

Eine Außenohrübertragungsfunktion oder HRTF repräsentiert einen Zusammenhang zwischen dem Schalldruck $p(t)$ ($t$: Zeitkoordinate) am Ort einer Schallquelle und dem dadurch hervorgerufenen Schalldruck $x(t)$ im Innenohr eines Menschen. Der Schalldruckverlauf im Innenohr unterscheidet sich in charakteristischer Weise vom Schalldruckverlauf am Ort der Schallquelle, da ein Schallsignal auf seinem Weg zum Innenohr zahlreichen Reflexionen und/oder Beugungen am Ohr, Kopf und Körper unterworfen ist. Der Zusammenhang der Schalldrucke an der Schallquelle und im Innenohr kann mittels einer Impulsantwort $h(t)$ folgendermaßen dargestellt werden:

$$x(t) = \int h(\tau) * p(t-\tau)\ d\tau$$

Die Impulsantwort $h(\tau)$ wird häufig auch als "Head Related Impulse Response" (HRIR) bezeichnet. Die Außenohrübertragungsfunktion oder HRTF wird oft durch die Fouriertransformierte von $h(\tau)$, d.h. durch die entsprechende spektrale Übertragungsfunktion repräsentiert.

Die HRTF-Filter der erfindungsgemäßen Konferenzeinrichtung bilden jeweils eine Signalveränderung, die ein Schallsignal von der Schallquelle bis zum Innenohr erfährt, in repräsentativer Weise künstlich nach.

Mit Hilfe einer sowohl für das linke Ohr als auch für das rechte Ohr vorliegenden Außenohrübertragungsfunktion können aus einem monauralen Audiosignal binaurale Audiosignale synthetisiert werden, die - wenn mit beiden Ohren wahrgenommen - einen korrekten räumlichen Höreindruck hervorrufen. Mit binaural wird in diesem Zusammenhang, wie beim gebräuchlichen Begriff "stereo", eine Differenzierung nach linkem und rechtem Ohr bezeichnet, während monaural ("mono") ein Fehlen einer solchen Differenzierung bezeichnet.

Eine binaurale Filterung von Audiosignalen erfordert allerdings zwei Audiokanäle sowie zwei geeignet positionierte Wiedergabelautsprecher pro Audiosignal. In gebräuchlichen Kommunikationssystemen und insbesondere bei Konferenzsystemen sind zweikanalige Audioübertragungen jedoch meist nicht vorgesehen, so dass binaurale HRTFs dort meist nicht nutzbringend eingesetzt werden können.

Mit Einschränkungen lässt sich jedoch auch mittels monauraler HRTFs, d.h. gewissermaßen durch Klangfärbung von Audiosignalen ein richtungsabhängiges Hörempfinden virtuell nachbilden. Auf diese Weise können Quellen von monauralen Audiosignalen durch mit individuellen HRTF-Filterkoeffizientensätzen versehene HRTF-Filter hinsichtlich eines Höreindrucks der gefilterten Audiosignale virtuell in unterschiedlichen Richtungen einer sogenannten Medianebene positioniert werden. Als Medianebene wird üblicherweise die auf der Verbindungsachse beider Ohren senkrecht stehende Ebene bezeichnet.

Anders als binaurale HRTF-Filter lassen sich monaurale HRTF-Filter ohne wesentliche Modifikationen gebräuchlicher monaural-basierter Kommunikationssysteme einsetzen. Monaurale HRTF-Filter lassen sich auch auf einfache Weise in herkömmliche monaurale Konferenzeinrichtungen integrieren.

Durch eine virtuelle Positionierung von Konferenzteilnehmern in unterschiedlichen Richtungen der Medianebene kann die Unterscheidbarkeit der Konferenzteilnehmer, insbesondere wenn diese gleichzeitig sprechen, wesentlich verbessert werden. Darüber hinaus kann auch die Verständlichkeit eines gegebenenfalls auszuwählenden Konferenzteilnehmers verbessert werden, indem dieser Konferenzteilnehmer virtuell in einer Richtung positioniert wird, in der hörerseitig eine bessere Sprachverständlichkeit vorhanden ist. Dies ist in der Medianebene z.B. in gerader Blickrichtung der Fall.

Vorzugsweise kann eine Filtersteuerung zum statischen oder dynamischen Zuordnen eines individuellen HRTF-Filterkoeffizientensatzes zu einem HRTF-Filter und/oder zum Zuordnen eines HRTF-Filters zu einem Konferenzteilnehmer vorgesehen sein. Die zuzuordnenden HRTF-Filterkoeffizientensätze können hierbei nach unterschiedlichen Kriterien statisch oder dynamisch gewählt, erzeugt oder konfiguriert werden. Die Zuordnung kann abhängig von einer Konferenzsteuerung oder abhängig von Anforderungen von Konferenzteilnehmern erfolgen.

Nach einer vorteilhaften Weiterbildung der Erfindung kann die Filtersteuerung eine Audioanalyseeinrichtung zur Analyse von Audiosignalen der Konferenzteilnehmer aufweisen, die derart eingerichtet ist, dass die Zuordnung abhängig vom Analyseergebnis erfolgt.

Durch die Analyse der Audiosignale und einer analyseabhängigen Zuordnung kann z.B. ein jeweils wortführender Konferenzteilnehmer hinsichtlich des Höreindrucks virtuell von anderen Konferenzteilnehmern separiert werden und so gewissermaßen virtuell im Zentrum der Aufmerksamkeit positioniert werden, während andere Konferenzteilnehmer virtuell in einem Hörhintergrund positioniert werden.

Nach einer vorteilhaften Ausführungsform der Erfindung sind die HRTF-Filterkoeffizientensätze spezifisch an eine Übertragungsbandbreite der Konferenzeinrichtung und/oder an eine Übertragungsbandbreite von an einer Konferenz zu beteiligenden Endgeräten abgestimmt. Derartige HRTF-Filterkoeffizientensätze können beispielsweise so erstellt werden, dass sie bei eingeschränkter Übertragungsbandbreite hinsichtlich des Höreindrucks eine ähnliche Hörrichtungswahrnehmung hervorrufen, wie für den gesamten Hörfrequenzbereich ermittelte HRTF-Filterkoeffizientensätze.

Weiterhin können unterschiedliche teilnehmerspezifische, endgerätespezifische, verbindungsspezifische, netzspezifische und/oder konferenzstatusspezifische HRTF-Filterkoeffizientensätze vorgesehen sein.

Nach einer vorteilhaften Weiterbildung der Erfindung kann die Konferenzeinrichtung eine Umsetzeinrichtung aufweisen zum Umsetzen eines von einem binauralen Konferenzteilnehmer stammenden binauralen Audiosignals in ein von einem der monauralen HRTF-Filter zu filterndes monaurales Audiosignal. Mittels einer solchen Umsetzeinrichtung können auch binaurale Konferenzteilnehmer, d.h. über mindestens zwei Audiokanäle verfügende Konferenzteilnehmer in eine Konferenz mit monauralen Konferenzteilnehmern einbezogen werden.

Eine derartige Konferenz zwischen monauralen und binauralen Konferenzteilnehmern kann beispielweise realisiert werden, indem durch die Konferenzeinrichtung zwei separate Konferenzschaltungen eingerichtet werden und zwar eine monaurale und eine binaurale Konferenzschaltung. Bei x monauralen und y binauralen Konferenzteilnehmern umfasst die monaurale Konferenz x+y monaurale Eingangsteilnehmer und x Ausgangsteilnehmer, während die binaurale Konferenz x+y binaurale Eingangsteilnehmer und y Ausgangsteilnehmer aufweist. Bei der binauralen Konferenzschaltung sind die Audiosignale der x monauralen Konferenzteilnehmer zur Erzielung eines mit dem binauralen Konferenzteilnehmer vergleichbaren Höreindrucks mittels binauraler HRTF-Filter zu filtern. Entsprechend sind bei der monauralen Konferenz die Audiosignale der y binauralen Teilnehmer jeweils mittels der Umsetzeinrichtung in ein monaurales Audiosignal umzusetzen.

Vorzugsweise ist die Umsetzeinrichtung derart ausgestaltet, dass eine durch einen Höreindruck des binauralen Audiosignals bestimmte virtuelle Position des binauralen Konferenzteilnehmers in einen monauralen HRTF-Filterkoeffizientensatz für den betreffenden HRTF-Filter umgesetzt wird, durch dessen Filterung der binaurale Konferenzteilnehmer virtuell in der Medianebene positioniert wird. Auf diese Weise kann eine durch ein binaurales Audiosignal angedeutete virtuelle Audioquellenposition im dreidimensionalen Raum auf eine geeignete Position in der zweidimensionalen Medianebene abgebildet werden.

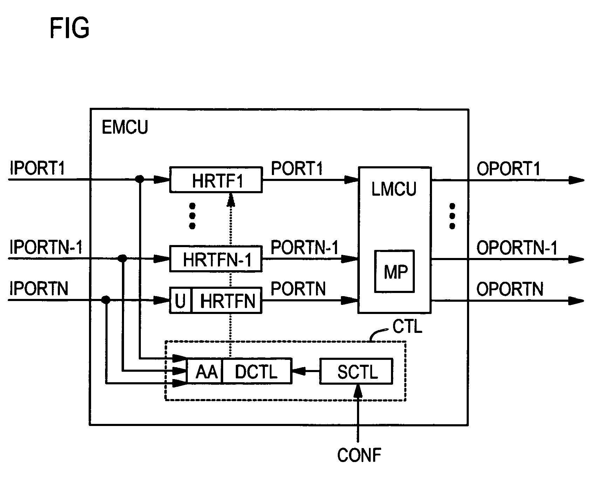

Ein Ausführungsbeispiel der Erfindung wird nachfolgend anhand der Figur näher erläutert.

Die Figur zeigt eine erfindungsgemäße Konferenzeinrichtung in schematischer Darstellung.

Die Figur zeigt eine um HRTF-Filterfunktionen (HRTF: Head Related Transfer Function) erweiterte Konferenzeinrichtung EMCU in schematischer Darstellung. Die Konferenzeinrichtung EMCU dient im vorliegenden Ausführungsbeispiel unter Anderem zum Mischen von Kommunikationssignalen, z.B. Sprach-, Audio-, Video- und/oder Multimediasignalen verschiedener Konferenzteilnehmer und zum Verteilen der gemischten Kommunikationssignale an die Konferenzteilnehmer, so dass jeder Konferenzteilnehmer die von den anderen Konferenzteilnehmern ausgehenden Kommunikationssignale empfängt. Die Konferenzeinrichtung EMCU kann als leitungsorientierte oder als paketorientierte Konferenzeinrichtung ausgestaltet sein. Im Falle einer paketorientierten Ausgestaltung sind unter Kommunikationssignalen auch pa ketbasierte Medienströme, wie z.B. Sprach-, Audio-, Video- und/oder Multimedia-Datenpaketströme zu verstehen. Im Folgenden werden aus Übersichtlichkeitsgründen nur noch Kommunikationssignale in Form von Audiosignalen, wie z.B. Sprach- oder Tonsignale, betrachtet. Ein Übertragungssignal zur Übertragung einer Datenrepräsentation eines Audiosignals wird dabei - dem üblichen Sprachgebrauch folgend - ebenfalls als Audiosignal bezeichnet.

Die Konferenzeinrichtung EMCU verfügt über N Eingangsports IPORT1, ...,IPORTN-1, IPORTN, jeweils zum Empfang eines von einem Konferenzteilnehmer ausgehenden Audiosignals oder Audiokanals, sowie über N Ausgangsports OPORT1, ..., OPORTN-1, OPORTN zur Ausgabe der gemischten Audiosignale bzw. Audiokanäle an die Konferenzteilnehmer.

Zur Steuerung einer Konferenzschaltung und zur Realisierung der Mischfunktionalität enthält die Konferenzeinrichtung EMCU eine herkömmliche Konferenzeinheit LMCU, die vorzugsweise als Standard-MCU (MCU: Multipoint Control Unit) gemäß der ITU-T-Empfehlung H.323 ausgestaltet ist. Die Konferenzeinheit LMCU weist eine vorzugsweise gemäß der H.323-Empfehlung implementierte Mehrpunktprozessoreinheit MP (Multipoint Processor) auf, die als Konferenzmischeinrichtung zum Mischen der von den Konferenzteilnehmern ausgehenden Audiosignale bzw. Audiokanäle sowie zum Übertragen der gemischten Audiosignale bzw. Audiokanäle zu den Konferenzteilnehmern dient. Die Konferenzeinheit LMCU verfügt über konferenzeinrichtungsinterne Eingangsports PORT1, ..., PORTN-1, PORTN, während ihre Ausgangsports mit den Ausgangsports OPORT1, ..., OPORTN-1, OPORTN identisch sind.

Die Ports IPORT1,...,IPORTN, PORT1,...,PORTN, OPORT1, ...,OPORTN sind jeweils einem Audio-Medienkanal zugeordnet. Im vorliegenden Ausführungsbeispiel entspricht den Ports IPORT1,..., IPORTN-1, PORT1,...,PORTN, OPORT1,...,OPORTN jeweils ein einzelner monauraler "mono" Audiokanal für monaura le Audiosignale und dem Eingangsport IPORTN ein binauraler "Stereo" Doppelaudiokanal für binaurale Audiosignale.

Die Konferenzeinrichtung EMCU verfügt erfindungsgemäß über N monaurale HRTF-Filter HRTF1,...,HRTFN-1,HRTFN, die vorzugsweise als digitale Impulsantwortfilter realisiert sind. Die Filtereingänge der HRTF-Filter HRTF1,...,HRTFN-1 sind jeweils mit einem der Eingangsports IPORT1,...,IPORTN-1 der Konferenzeinrichtung EMCU gekoppelt. Der Filtereingang des HRTF-Filters HRTFN ist über eine Umsetzeinrichtung U mit dem Eingangsport IPORTN gekoppelt. Damit wird jedem Konferenzteilnehmer durch Zuordnung eines Eingangsports IPORT1,...,IPORTN eines der HRTF-Filter HRTF1,...,HRTFN zugeordnet.

Die Umsetzeinrichtung U dient zum Umsetzen eines von einem binauralen Konferenzteilnehmer über den Eingangsport IPORTN empfangenen binauralen Audiosignals in ein von dem monauralen HRTF-Filter HRTFN zu filterndes monaurales Audiosignal. Die Umsetzeinrichtung U erlaubt es, auch binaurale Konferenzteilnehmer, d.h. über zwei Audiokanäle verfügende Konferenzteilnehmer in eine Konferenz mit monauralen Konferenzteilnehmern einzubeziehen.

Die Filterausgänge der HRTF-Filter HRTF1,...,HRTFN sind über die Ports PORT1,...,PORTN an die Konferenzeinheit LMCU angekoppelt, um die gefilterten Audiosignale der Konferenzteilnehmer durch die Mehrpunktprozessoreinheit MP der Konferenzeinheit LMCU zu mischen und die gemischten Audiosignale über die Ausgangsports OPORT1,...,OPORTN an die Konferenzteilnehmer zu verteilen.

Jeder der HRTF-Filter HRTF1,...,HRTFN weist jeweils einen individuellen monauralen HRTF-Filterkoeffizientensatz auf, der die Filtercharakteristik des betreffenden HRTF-Filters, das heißt dessen frequenzabhängige Amplitudendämpfung und Phasenverschiebung bestimmt. Ein jeweiliger monauraler HRTF-Filterkoeffizientensatz ist vorzugsweise als ein Satz von diskreten Impulsantwortkoeffizienten oder -Parametern gegeben. Zur Filterung eines monauralen Audiosignals werden die Impulsantwortkoeffizienten mittels eines digitalen Signalprozessors im Sinne einer mathematischen Faltung fortlaufend mit Abtastwerten des Audiosignals multipliziert und die Produkte addiert, vorzugsweise unter Nutzung rekursiver Digitalfilter, sog. IIR-Filter (IIR: Infinite Impulse Response).

Vorzugsweise werden solche HRTF-Filterkoeffizientensätze gewählt oder erzeugt, die spezifisch an die begrenzte Übertragungsbandbreite der Konferenzeinrichtung EMCU und/oder an die begrenzte Übertragungsbandbreite von Endgeräten von Konferenzteilnehmern abgestimmt sind. Derartige HRTF-Filterkoeffizientensätze können so konstruiert oder generiert werden, dass ihre Faltung mit den Abtastwerten eines Audiosignals einem Überlagern einer oder mehrerer zeitverzögerter und gegebenenfalls mit einer Klangfärbung versehener Kopien des Audiosignals entspricht. Durch eine solche zeitversetzte Überlagerung können Reflexionen, denen ein Audiosignal auf dem Weg von der Audioquelle über das Außenohr ins Innenohr unterliegt, künstlich nachgebildet werden. Auf diese Weise kann ein jeweiliger HRTF-Filterkoeffizientensatz gewissermaßen aus einzelnen Reflexionen zusammengesetzt bzw. konstruiert werden, die nach physikalischen und/oder physiologischen Gegebenheiten gewählt werden können. Die HRTF-Filterkoeffizientensätze werden derart konstruiert und den HRTF-Filtern HRTF1,...,.HRTFN und damit den Konferenzteilnehmern zugeordnet, dass die Konferenzteilnehmer hinsichtlich des Höreindrucks der gefilterten Audiosignale virtuell in unterschiedlichen Richtungen der Medianebene positioniert werden, um von einem jeweiligen Zuhörer möglichst gut unterschieden werden zu können.

Praktische Versuche zeigen, dass zur Erzielung einer guten Unterscheidbarkeit sowie zu einer subjektiven Verbesserung der Verständlichkeit von Konferenzteilnehmern, künstlich konstruierte HRTF-Koeffizientensätze mit einer verhältnismäßig geringen Anzahl von 10 - 40 Koeffizienten im Bandbreitenbereich herkömmlicher Telekommunikationssysteme bereits ausreichen. Durch die geringe Anzahl der erforderlichen HRTF-Filterkoeffizienten wird der zur digitalen Filterung erforderliche Rechenaufwand erheblich verringert. Herkömmliche HRTF-Filterkoeffizientensätze, die üblicherweise nicht konstruiert, sondern aus akustischen Messungen abgeleitet werden, umfassen in der Regel erheblich mehr (ca. 128 - 512) Filterkoeffizienten.

Die Konferenzeinrichtung EMCU weist weiterhin eine Filtersteuerung CTL auf zum Zuordnen eines individuellen HRTF-Filterkoeffizientensatzes zu einem jeweiligen HRTF-Filter HRTF1,...,HRTFN und/oder zum Zuordnen eines jeweiligen HRTF-Filters HRTF1,...,HRTFN zu einem Konferenzteilnehmer. Die Filtersteuerung CTL kann den HRTF-Filtern HRTF1,...,HRTFN vorgegebene HRTF-Filterkoeffizientensätze und/oder dynamisch erzeugte HRTF-Filterkoeffizientensätze zuordnen. Zur statischen Zuordnung von HRTF-Filterkoeffizienten zu den HRTF-Filtern HRTF1, ...,HRTFN weist die Filtersteuerung CTL eine statische Steuerung SCTL und zur dynamischen Zuordnung eine dynamische Steuerung DCTL auf.

Die Filtersteuerung CTL verfügt ferner über eine an die dynamische Steuerung DCTL angeschlossene Audioanalyseeinrichtung AA, die an die Eingangsports IPORT1,...,IPORTN angekoppelt ist. Die Audioanalyseeinrichtung AA dient zur Analyse der Audiosignale der Konferenzteilnehmer, um abhängig vom Analyseergebnis über die dynamische Steuerung DCTL die Zuordnung der HRTF-Filterkoeffizientensätze zu den HRTF-Filtern HRTF1,...,HRTFN zu steuern. Auf diese Weise kann die Filtersteuerung CTL den HRTF-Filtern HRTF1, ...,HRTFN dynamisch wechselnde HRTF-Filterkoeffizientensätze speicher-, wortführer- und/oder teilnehmerspezifisch zuordnen. Mittels der an die dynamische Steuerung DCTL gekoppelten statischen Steuerung SCTL können die HRTF-Filterkoeffizienten und/oder die HRTF-Filter HRTF1, ..., HRTFN statisch konfiguriert und vor eingestellt werden. Zu diesem Zweck weist die statische Steuerung SCTL einen externen Konfigurationseingang CONF auf.

## Patentansprüche

1.   Konferenzeinrichtung (EMCU)
mit mehreren, jeweils einem Konferenzteilnehmer zuzuordnenden HRTF-Filtern (HRTF1,...,HRTFN) - wobei HRTF für Head Related Transfer Function = Außenohrübertragungsfunktion steht - jeweils zum Filtern eines vom jeweils zugeordneten Konferenzteilnehmer stammenden Audiosignals, wobei einem jeweiligen HRTF-Filter (HRTF1,...,HRTFN) ein individueller, für dessen Filtercharakteristik maßgeblicher HRTF-Filterkoeffizientensatz zugeordnet ist, und
mit einer an die HRTF-Filter (HRTF1,...,HRTFN) gekoppelten Konferenzmischeinrichtung (MP) zum Mischen der individuell gefilterten Audiosignale verschiedener Konferenzteilnehmer und zum Übertragen der gemischten Audiosignale an Konferenzteilnehmer,
**dadurch gekennzeichnet, dass**
die HRTF-Filter (HRTF1,...,HRTFN), die HRTF-Filterkoeffizientensätze, die Audiosignale und die gemischten Audiosignale monaural sind und
die monauralen HRTF-Filterkoeffizientensätze derart konstruiert und den HRTF-Filtern (HRTF1,...,HRTFN) zugeordnet sind, dass die Konferenzteilnehmer hinsichtlich des Höreindrucks der gefilterten Audiosignale virtuell in unterschiedlichen Richtungen der Medianebene positioniert sind.

2.   Konferenzeinrichtung nach Anspruch 1,
**dadurch gekennzeichnet,**
**dass** eine Filtersteuerung (CTL) vorgesehen ist, die eine Audioanalyseeinrichtung (AA) zur Analyse von Audiosignalen der Konferenzteilnehmer aufweist, die derart eingerichtet ist, dass die Zuordnung abhängig vom Analyseergebnis erfolgt.

3.   Konferenzeinrichtung nach Anspruch 1 oder 2,
**dadurch gekennzeichnet,**
**dass** die HRTF-Filterkoeffizientensätze an eine Übertragungsbandbreite der Konferenzeinrichtung (EMCU) und/oder an eine Übertragungsbandbreite von an einer Konferenz zu beteiligenden Endgeräten spezifisch abgestimmt sind.

4.   Konferenzeinrichtung nach einem der vorhergehenden Ansprüche,
**dadurch gekennzeichnet,**
**dass** unterschiedliche teilnehmerspezifische, endgerätespezifische, verbindungsspezifische, netzspezifische und/oder konferenzstatusspezifische HRTF-Filterkoeffizientensätze vorgesehen sind.

5.   Konferenzeinrichtung nach einem der vorhergehenden Ansprüche,
**gekennzeichnet durch**
eine Umsetzeinrichtung (U) zum Umsetzen eines von einem binauralen Konferenzteilnehmer stammenden binauralen Audiosignals in ein von einem der monauralen HRTF-Filter (HRTF1,...,HRTFN) zu filterndes monaurales Audiosignal.

6. Konferenzeinrichtung nach Anspruch 5,
**dadurch gekennzeichnet,**
**dass** die Umsetzeinrichtung (U) derart ausgestaltet ist, dass eine durch einen Höreindruck des binauralen Audiosignals bestimmte virtuelle Position des binauralen Konferenzteilnehmers in einen monauralen HRTF-Filterkoeffizientensatz für den betreffenden HRTF-Filter (HRTFN) umgesetzt wird, durch dessen Filterung der binaurale Konferenzteilnehmer virtuell in der Medianebene positioniert wird.

7. Verfahren zur Mehrpunktkommunikation, wobei mehreren Konferenzteilnehmern jeweils ein HRTF-Filter (HRTF1,...,HRTFN) mit einem individuellen, für dessen Filtercharakteristik maßgeblichen HRTF-Filterkoeffizientensatz zugeordnet wird,
ein von einem jeweiligen Konferenzteilnehmer stammendes Audiosignal durch das dem Konferenzteilnehmer zugeordnete HRTF-Filter (HRTF1,...,HRTFN) gefiltert wird,
die individuell gefilterten Audiosignale verschiedener Konferenzteilnehmer gemischt werden, und
die gemischten Audiosignale an Konferenzteilnehmer übertragen werden,
**dadurch gekennzeichnet, dass**
die HRTF-Filter (HRTF1,...,HRTFN), die HRTF-Filterkoeffizientensätze, die Audiosignale und die gemischten Audiosignale monaural sind und
die monauralen HRTF-Filterkoeffizientensätze derart konstruiert und den HRTF-Filtern (HRTF1,...,HRTFN) zugeordnet werden, dass die Konferenzteilnehmer hinsichtlich des Höreindrucks der gefilterten Audiosignale virtuell in unterschiedlichen Richtungen der Medianebene positioniert werden.

8. Verfahren nach Anspruch 7,
**dadurch gekennzeichnet,**
**dass** ein jeweils wortführender Konferenzteilnehmer erkannt wird, und
**dass** dem erkannten Konferenzteilnehmer ein monaurales HRTF-Filter (HRTF1,...,HRTFN) und/oder ein monauraler HRTF-Filterkoeffizientensatz zugeordnet wird, wodurch der erkannte Konferenzteilnehmer hinsichtlich eines Höreindrucks der gefilterten Audiosignale virtuell von anderen Konferenzteilnehmern separiert wird.

**Claims**

1. A conference system (EMCU) comprising a plurality of HRTF filters (HRTF1, ..., HRTFN) each to be allocated to a conference participant - wherein HRTF stands for Head Related Transfer Function - each filter being used for filtering an audio signal coming from the particular allocated conference participant, wherein an individual HRTF filter coefficient set is allocated to each HRTF filter (HRTF1,..., HRTFN) for defining the filter characteristics of that filter, and comprising
a conference mixing device (MP) coupled to the HRTF filters (HRTF1,..., HRTFN) for mixing the individually filtered audio signals of different conference participants and for transmitting the mixed audio signals to conference participants,
**characterized in that**
the HRTF filters (HRTF1,..., HRTFN), the HRTF filter coefficient sets, the audio signals and the mixed audio signals are monaural and
the monaural HRTF filter coefficient sets are configured and allocated to the HRTF filters (HRTF1,..., HRTFN) in such a way that the conference participants are virtually positioned in different directions of the median plane with respect to the auditory impression of the filtered audio signals.

2. The conference system according to claim 1,
**characterized in that** a filter control (CTL) is provided, which has an audio analysis device (AA) for analyzing audio signals of the conference participants, which is configured such that the allocation is carried out dependent on the result of the analysis.

3. The conference system according to claim 1 or 2,
**characterized in that** the HRTF filter coefficient sets are specifically matched to a transmission bandwidth of the conference system (EMCU) and/or to a transmission bandwidth of terminals to be involved in a conference.

4. The conference system according to any of the preceding claims,
**characterized in that** different HRTF filter coefficient sets are provided for specific participants, terminals, connections, networks and/or conference statuses.

5. The conference system according to any of the preceding claims,
**characterized by** a converter (U) for converting a binaural audio signal coming from a binaural conference participant into a monaural audio signal to be filtered by one of the monaural HRTF filters (HRTF1,..., HRTFN).

6. The conference system according to claim 5,

**characterized in that** the converter (U) is configured such that a virtual position of the binaural conference participant, which is determined by an auditory impression of the binaural audio signal, is converted into a monaural HRTF filter coefficient set for the corresponding HRTF filter (HRTFN), and as a result of this filtering, the binaural conference participant is virtually positioned in the median plane.

**7.** A method for multi-point communication, wherein an HRTF filter (HRTF1,..., HRTFN) having an individual HRTF filter coefficient set that defines the filter characteristics of that HRTF filter is allocated to each of a plurality of conference participants,
an audio signal coming from a specific conference participant is filtered by the HRTF filter (HRTF1,..., HRTFN) that is allocated to that conference participant,
the individually filtered audio signals of different conference participants are mixed, and
the mixed audio signals are transmitted to conference participants,
**characterized in that**
the HRTF filters (HRTF1,..., HRTFN), the HRTF filter coefficient sets, the audio signals and the mixed audio signals are monaural, and
the monaural HRTF filter coefficient sets are configured and allocated to the HRTF filters (HRTF1,..., HRTFN) in such a way that the conference participants are virtually positioned in different directions of the median plane with respect to the auditory impression of the filtered audio signals.

**8.** The method according to claim 7,
**characterized in that** each speaking conference participant is acknowledged, and
**in that** the a monaural HRTF filter (HRTF1,..., HRTFN) and/or a monaural HRTF filter coefficient set is allocated to the acknowledged participant, whereby the acknowledged conference participants are virtually separated from other conference participants with respect to an auditory impression of the filtered audio signals.

**Revendications**

**1.** Système de conférence (EMCU)
comprenant plusieurs filtres HRTF (HRTF1,...,HRTFN) associés respectivement à un participant à une conférence - dans lequel HRTF signifie Head Related Transfer Function = fonction de transfert de l'oreille externe - respectivement pour filtrer un signal audio provenant du participant à la conférence respectivement associé, dans lequel un ensemble de coefficients de filtre HRTF individuel, déterminant pour sa caractéristique de filtre, est associé à un filtre HRTF (HRTFN1,..., HRTFN) respectif, et
comprenant un dispositif de mixage de conférence (MP) couplé aux filtres HRTF (HRTF1,...,HRTFN) pour le mixage des signaux audio filtrés individuellement de différents participants à la conférence et pour la transmission des signaux audio mixés à des participants à la conférence,
**caractérisé en ce que**
les filtres HRTF (HRTF1,...,HRTFN), les ensembles de coefficients de filtre HRTF, les signaux audio et les signaux audio mixés sont monauraux et les ensembles de coefficients de filtre HRTF monauraux sont conçus et associés aux filtres HRTF (HRTF1,...,HRTFN) de telle sorte que les participants à la conférence sont positionnés virtuellement dans différentes directions du plan médian en termes d'écoute des signaux audio filtrés.

**2.** Système de conférence selon la revendication 1,
**caractérisé en ce**
**qu'**une commande de filtre (CTL) présentant un dispositif d'analyse audio (AA) pour l'analyse de signaux audio des participants à la conférence est prévue, la commande étant configurée pour que l'association soit effectuée en fonction du résultat de l'analyse.

**3.** Système de conférence selon la revendication 1 ou 2,
**caractérisé en ce que**
les ensembles de coefficients de filtre HRTF sont spécifiquement harmonisés avec une largeur de bande de transmission du système de conférence (EMCU) et/ou avec une largeur de bande de transmission de terminaux devant prendre part à une conférence.

**4.** Système de conférence selon l'une quelconque des revendications précédentes,
**caractérisé en ce que**
différents ensembles de coefficients de filtre HRTF spécifiques aux participants, spécifiques aux terminaux, spécifiques à la connexion, spécifiques au réseau et/ou spécifiques au statut de la conférence sont prévus.

**5.** Système de conférence selon l'une quelconque des revendications précédentes,
**caractérisé par**
un dispositif convertisseur (U) destiné à convertir un signal audio binaural provenant d'un participant à la conférence binaural en un signal audio monaural à filtrer par un des filtres HRTF monauraux (HRTF1,...,HRTFN).

**6.** Système de conférence selon la revendication 5,
**caractérisé en ce que**
le dispositif convertisseur (U) est conçu de telle sorte qu'une position virtuelle du participant à la conférence binaural définie par une écoute du signal audio binaural est convertie en un ensemble de coefficients de filtre HRTF monaural pour le filtre HRTF concerné (HRTFN) par le filtrage duquel le participant à la conférence binaural est positionné virtuellement dans le plan médian.

7. Procédé de communication multipoint, dans lequel un filtre HRTF (HRTF1,...,HRTFN) comprenant un ensemble de coefficients de filtre HRTF individuel, déterminant pour sa caractéristique de filtre est respectivement associé à plusieurs participants à la conférence,

un signal audio provenant d'un participant à la conférence respectif est filtré par le filtre HRTF (HRTF1,...,HRTFN) associé au participant à la conférence,

les signaux audio filtrés individuellement de différents participants à la conférence sont mixés,

et les signaux audio mixés sont transmis aux participants à la conférence,

**caractérisé en ce que**

les filtres HRTF (HRTF1,...,HRTFN), les ensembles de coefficients de filtre HRTF, les signaux audio et les signaux audio mixés sont monauraux et

les ensembles de coefficients de filtre HRTF monauraux sont conçus et les filtres HRTF (HRTF1,...,HRTFN) sont associés de telle sorte que les participants à la conférence sont positionnés virtuellement dans différentes directions du plan médian en termes d'écoute des signaux audio filtrés.

8. Procédé selon la revendication 7,

**caractérisé en ce**

**qu'**un participant à la conférence dirigeant respectivement les échanges est reconnu, et

**qu'**un filtre HRTF (HRTF1,...,HRTFN) monaural et/ou un ensemble de coefficients de filtre HRTF monaural est associé au participant à la conférence reconnu, moyennant quoi le participant à la conférence reconnu est virtuellement séparé des autres participants à la conférence en termes d'écoute des signaux audio filtrés.

FIG

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6011851 A
- US 20030081115 A1

- US 6118875 A